# EUROPÄISCHE PATENTSCHRIFT

(11) **EP 3 710 342 B1**
(45) Veröffentlichungstag und Bekanntmachung des Hinweises auf die Patenterteilung: **27.03.2024**
(21) Anmeldenummer: 18807220.1
(22) Anmeldetag: 09.11.2018
(51) Int. Cl.: B62D 25/02, B60K 1/04

(54) **SEITENSCHWELLERANORDNUNG EINER KAROSSERIE EINES ELEKTRISCH BETREIBBAREN KRAFTWAGENS**
SIDE SILL ARRANGEMENT OF A BODY OF AN ELECTRICALLY OPERABLE MOTOR VEHICLE
ENSEMBLE FORMANT MARCHEPIED D'UNE CARROSSERIE D'UN VÉHICULE À MOTEUR À FONCTIONNEMENT ÉLECTRIQUE

(30) Priorität: 17.11.2017 DE 102017010670
(43) Veröffentlichungstag der Anmeldung: 23.09.2020
(73) Patentinhaber: Mercedes-Benz Group AG, 70372 Stuttgart (DE)
(72) Erfinder: EBNER, Martin, 71229 Leonberg (DE); MARINKOVIC, Miroslav, 70597 Stuttgart (DE); UTZERI, Fabio, 71229 Leonberg (DE)
(74) Vertreter: Novagraaf Group
(86) Internationale Anmeldenummer: PCT/EP2018/080707
(87) Internationale Veröffentlichungsnummer: WO 2019/096675

(56) Entgegenhaltungen:
- EP-A1- 2 070 754
- EP-B1- 2 468 609
- DE-A1- 10 224 884
- DE-A1-102017 206 586
- JP-A- 2006 182 295
- US-A- 5 704 644
- US-B2- 8 696 051

## Beschreibung

Die Erfindung betrifft ein Baukastensystem für eine Karosserie eines Kraftwagens gemäß Oberbegriff des Anspruchs 1. Des Weiteren betrifft die Erfindung ein Verfahren zum Herstellen einer solchen Karosserie gemäß Oberbegriff des Anspruchs 9.

Im Unterschied zu Karosserien für Kraftwagen, welche mit einem Verbrennungsmotor angetrieben werden, sind solche für Kraftwagen mit elektrischem Antrieb weitgehend anderen Anforderungen ausgesetzt. Dies hängt im erheblichen Maß mit dem Gewicht der Fahrzeugbatterien zusammen, sodass beispielsweise die Seitenschweller der Karosserie bei einer unfallbedingten Kraftbeaufschlagung, welche beispielsweise mit dem sogenannten Pfahlanpralltest simuliert wird, mit weitaus höheren Kräften beaufschlagt werden, als dies bei einer Karossiere für einen Kraftwagen mit konventionellem Antriebskonzept der Fall ist. Gleichzeitig ist es im Hinblick auf die Fertigungskosten wünschenswert, die Karosserie für Kraftwagen einer Fahrzeugbaureihe über alle unterschiedlichen Bauvarianten, also beispielsweise mit Verbrennungsmotor oder mit elektrischem Antrieb, weitestgehend identisch zu gestalten.

Aus der EP 2 468 609 B1 ist bereits eine Seitenschwelleranordnung für eine Karosserie eines Kraftwagens mit elektrischem Antrieb als bekannt zu entnehmen, bei welcher die Fahrzeugbatterie mittels eines Batterietragrahmens innenseitig beziehungsweise unterseitig des jeweils korrespondierenden Seitenschwellers befestigt wird. Innerhalb des Hohlprofils des jeweiligen Seitenschwellers erstreckt sich dabei über einen Längenbereich eine Halteleiste, über welche die mittels jeweiliger Schraubverbindungen erzeugten Haltekräfte entlang des jeweiligen Seitenschwellers vergleichmäßigt beziehungsweise verteilt werden.

Aus der US 8 696 051 B2 geht ein Seitenschweller für ein batterieelektrisch angetriebenes Kraftfahrzeug hervor, welcher als Hohlprofil ausgebildet ist, in dem ein als Montageteil ausgebildetes Energieabsorptionselement angeordnet ist, das sich über die gesamte Breite des Seitenschwellers zwischen jeweiligen Seitenschwellerwänden erstreckt. Bei einem Seitenaufprall eines Hindernisses wird das Energieabsorptionselement verformt und sorgt dadurch für reduzierte Belastungen der Fahrzeuginsassen. Unterhalb des Energieabsorptionselements wird an der Unterseite der Seitenschweller ein schwerer Batterietragrahmen angeschraubt.

Weitere Kraftwagenkarosserien gehen aus der DE 102 24 884 A1, der DE 10 2017 206 586 A1 sowie der JP 2006-182295 A hervor.

Aufgabe der vorliegenden Erfindung ist es, ein Baukastensystem und ein Verfahren zum Herstellen einer Karosserie eines Kraftwagens zu schaffen, mittels welchem sich verbesserte Unfalleigenschaften der Karosserie im Bereich der Seitenschweller realisieren lassen.

Diese Aufgabe wird erfindungsgemäß durch ein Baukastensystem mit den Merkmalen des Anspruchs 1 und einem Verfahren zum Herstellen einer Karosserie eines Kraftwagens gemäß Anspruch 9 gelöst. Vorteilhafte Ausgestaltungen mit zweckmäßigen Weiterbildungen der Erfindung sind Gegenstand der abhängigen Ansprüche.

Das erfindungsgemäße Baukastensystem für eine Karosserie eines Kraftwagens, welcher zumindest eine elektrisch betreibbare Bauvariante und eine verbrennungsmotorisch betreibbare Bauvariante umfasst, umfasst jeweilige bauvariantenübergreifende Seitenschweller, welche zumindest in einem jeweiligen Längenbereich ein Hohlprofil aufweisen. Um dabei jeweilige Karosserien für die elektrisch betreibbaren Bauvarianten und für die verbrennungsmotorisch betreibbaren Bauvarianten der jeweiligen Karosserie zu schaffen, welche ein besonders günstiges, jeweiliges Unfallverhalten aufweisen, ist es erfindungsgemäß vorgesehen, dass bei der verbrennungsmotorisch betreibbaren Bauvariante die jeweiligen Seitenschweller im entsprechenden Längenbereich ein Profil aufweisen, innerhalb welchem kein Verstärkungselement angeordnet ist, und dass bei der elektrisch betreibbaren Bauvariante des Kraftwagens, bei der an den Seitenschwellern ein Batterietragrahmen mittels jeweiliger Befestigungselemente an jeweils zugehörigen Befestigungsstellen der Seitenschweller festlegbar ist, innerhalb des jeweiligen Hohlraums des entsprechenden Seitenschwellers ein zugeordnetes, variantenspezifisches Verstärkungselement vorgesehen ist, welches sich zumindest über die annähernd gesamte Breite des zugeordneten Seitenschwellers zwischen jeweiligen Seitenschwellerwänden erstreckt.

Das erfindungsgemäße Baukastensystem umfasst somit jeweilige Seitenschweller, welche bei der verbrennungsmotorischen Bauvariante des Kraftwagens innerhalb deren jeweiligem Hohlraum kein Verstärkungselement aufweisen, und welche bei der elektrisch betreibbaren Bauvariante innerhalb deren jeweiligem Hohlraum wenigstens ein jeweiliges Verstärkungselement aufweisen. Somit ist insgesamt eine Karosserie geschaffen, welche im Bereich der jeweiligen Seitenschweller auf einfache Weise an die jeweilige Bauvariante des Kraftwagens - entweder die verbrennungsmotorisch betreibbare oder die elektrisch betreibbare - angepasst werden kann, indem entsprechende Verstärkungselemente innerhalb des Hohlraums des jeweiligen Seitenschwellers vorgesehen werden - oder nicht. Somit kann die Karosserie des Kraftwagens bauvariantenübergreifend sowohl für eine elektrisch betreibbare als auch für eine verbrennungsmotorisch betreibbare Variante eingesetzt werden, wobei hierbei lediglich die jeweiligen Seitenschweller im Bedarfsfall um die jeweiligen Verstärkungselemente ergänzt werden. Somit ist insgesamt ein Kraftwagen ermöglicht, welcher über all seine Bauvarianten eine annähernd identische Karosserie aufweist, die nur punktuell ergänzt werden kann.

Der Vorteil eines derartigen Baukastensystems besteht insbesondere darin, dass sich ersichtlicherweise erhebliche Kostenvorteile ergeben. So kann das jeweilige Verstärkungselement beispielsweise erst im Laufe der Montage eingebracht werden, sodass beispielsweise der Rohbau der Karosserie bauvariantenübergreifend für alle Antriebskonzepte gleich erfolgen kann. Die individuelle Anpassung insbesondere an die elektrisch betreibbare Bauvariante erfolgt dann vorzugsweise erst innerhalb der Endmontage, in der vor dem Fixieren des Batterietragrahmens beispielsweise die jeweiligen Verstärkungselemente in den zugehörigen Hohlräumen der entsprechenden Seitenschweller positioniert und fixiert werden.

Bei einer vorteilhaften Ausführungsform des Baukastensystems ist vorgesehen, dass innerhalb des jeweiligen Hohlraums des entsprechenden Seitenschwellers ein zugeordnetes Verstärkungselement vorgesehen ist, welches sich über die annähernd gesamte Breite des zugeordneten Seitenschwellers zwischen jeweiligen Seitenschwellerwänden erstreckt und dass die Verstärkungselemente im Bereich der Befestigungsstellen für den Batterietragrahmen angeordnet sind und sich jeweils -in Kraftwagenquerrichtung gesehen- zumindest in teilweiser Überdeckung mit dem Batterietragrahmen befinden. Durch die Integration eines jeweiligen Verstärkungselements in dessen zugehörigen Hohlraum ist somit ein jeweiliger Seitenschweller geschaffen, welcher einerseits dem höheren Gewicht bei einem elektrisch betreibbaren Kraftwagen, bei welchem der Batterietragrahmen im Bereich des Fahrzeugbodens zwischen den Seitenschwellern angeordnet ist, und andererseits auch sicherheitstechnischen Aspekten, welche beispielsweise infolge des höheren Fahrzeuggewichts im Bereich des jeweiligen Seitenschwellers erforderlich sind, Rechnung trägt. So können einerseits die statischen und dynamischen Kräfte infolge des Mehrgewichts der Batterie und andererseits damit einhergehenden höheren Unfallkräfte, welche beispielsweise infolge der höheren Masse bei einem Pfahlanprall aufzunehmen sind, in optimaler Weise im Bereich der Seitenschweller abgefangen werden. Dadurch, dass die Verstärkungselemente im Bereich der Befestigungsstellen für den Batterietragrahmen angeordnet sind, ergibt sich eine besonders günstige Befestigung des Batterietragrahmens mit einer einhergehenden optimalen Aufnahme der zwischen dem Batterietragrahmen beziehungsweise den Batterien einerseits und dem jeweiligen Seitenschweller andererseits wirkenden Kräfte. Durch die Überdeckung der Verstärkungselemente in Kraftwagenquerrichtung mit dem Batterietragrahmen wird dieser zumindest über eine Teilhöhe, vorzugsweise über seine gesamte Höhe von dem jeweiligen Verstärkungselement abgedeckt und so bei einem Seitenaufprall entsprechend geschützt.

Der Vorteil derartiger Verstärkungselemente ist es dabei, dass diese bei einem elektrisch betreibbaren Kraftwagen in einfacher Weise im Hohlraum der Seitenschweller angeordnet werden können und bei einem mit einem anderen Antriebskonzept, beispielsweise einem Verbrennungsmotor, entsprechend weggelassen werden können, da diese ansonsten zu einer zu hohen Steifigkeit der Karosserie im Bereich der Seitenschweller führen würden. Insgesamt hat dies den Vorteil, dass ein und dieselbe Karosserie sowohl bei einer elektromotorisch betreibbaren Variante als auch bei einer rein verbrennungsmotorisch betreibbaren Variante eines jeweiligen Kraftwagens zum Einsatz kommen kann, wobei je nach gewähltem Antriebskonzept die Verstärkungselemente vorgesehen werden oder nicht. Dies ergibt insgesamt ersichtlicherweise fertigungstechnische Vorteile und damit einhergehende Kosteneinsparungen.

In bevorzugter Ausführungsform ist vorgesehen, dass das mindestens eine Verstärkungselement pro Seitenschweller als Montageteil ausgebildet ist, welches beispielsweise nach Fertigstellung der Karosserie, insbesondere nach einer erfolgten Tauchlackierung zum Aufbringung einer Korrosionsschutzbeschichtung, nachträglich in den jeweiligen Seitenschweller eingeschoben und dort fixiert wird.

Die Verstärkungselemente selbst erstrecken sich vorzugsweise über die annähernd gesamte Breite des zugeordneten Seitenschwellers zwischen jeweiligen Seitenschwellerwänden, sodass beispielsweise bei einem Pfahlanprall oder dergleichen Seitenaufprall die jeweiligen Kräfte frühestmöglich von dem entsprechenden Verstärkungselement aufgenommen werden können. Auch hinsichtlich der statischen und dynamischen Kräfte ergeben sich wesentliche Vorteile, wenn sich das Verstärkungselement vorzugsweise über die gesamte Breite des Seitenschwellers zwischen den jeweiligen Seitenschwellerwänden erstreckt.

In weiterer Ausgestaltung der Erfindung hat es sich als vorteilhaft gezeigt, wenn die Verstärkungselemente die Befestigungsstellen für den Batterietragrahmen überdecken. Das heißt, die Befestigungsstellen werden mittels der Verstärkungselemente quasi eingerahmt, gegebenenfalls mit Hilfe des Seitenschwellerbodens und der Seitenschwellerseitenwand, sodass diese mittels der Verstärkungselemente ebenfalls im besonderen Maße bei einem Seitenaufprall geschützt sind und so das Risiko einer Zerstörung der jeweiligen Befestigungsstelle und ein damit einhergehendes Lösen des Batterietragrahmens vom Seitenschweller reduziert ist. Die Befestigungsstellen sind also vorzugsweise jeweils in einem quasi geschützten Raum angeordnet.

Eine weitere vorteilhafte Ausführungsform der Erfindung zeichnet sich dadurch aus, dass die Verstärkungselemente jeweilige Aufnahmen für Befestigungselemente für die Batterietragrahmen aufweisen. So kann am jeweiligen Verstärkungselement beispielsweise eine jeweilige Aufnahme in Form einer Befestigungsmutter oder dergleichen vorgesehen oder integriert sein, in welcher das zugehörige Befestigungselement des Batterietragrahmens, beispielsweise eine diesen fixierende Schraube, eingebracht wird. Ein derart gestaltetes Verstärkungselement ermöglicht eine besonders stabile Anbindung des Batterietragrahmens unmittelbar am jeweiligen Verstärkungselement und eine einfache und kostengünstige Ausgestaltung der gesamten Seitenschwelleranordnung.

Alternativ hierzu können die Verstärkungselemente auch jeweilige Aussparungen für die Befestigungselemente für den Batterietragrahmen aufweisen. Somit können die jeweiligen Befestigungselemente, beispielsweise Befestigungsmuttern, separat vom jeweiligen Verstärkungselement ausgebildet und beispielsweise rohbauseitig am entsprechenden Seitenschweller angebracht werden, beispielsweise durch Schweißen, Kleben oder dergleichen. Eine derartige Ausgestaltung hat beispielsweise Vorteile, wenn das jeweilige Befestigungselement, beispielsweise die jeweilige Befestigungsmutter, auch bei nicht-elektrisch betreibbaren Varianten des Kraftwagens genutzt werden soll oder wenn die Befestigungsmutter rohbauseitig vor dem Durchlaufen einer kathodischen Tauchlackierung oder dergleichen bereits am Rohbau angeordnet sein soll. Denkbar ist es allerdings auch, das Befestigungselement nach dem Durchlauf der Karosserie durch die kathodische Tauchlackierung im Zuge der Endmontage an entsprechender Stelle vorzusehen. Das jeweilige Verstärkungselement kann dabei eine Vertiefung, eine Nut, eine Ausnehmung oder dergleichen Aussparung aufweisen, innerhalb welcher das jeweilige Befestigungselement nach Anordnung des Verstärkungselements Platz findet.

Eine weitere vorteilhafte Ausführungsform der Erfindung sieht vor, dass zwischen dem jeweiligen Verstärkungselement und entsprechenden Seitenschwellerwänden jeweilige Distanzelemente angeordnet sind. Somit kann eine optimale Abstützung des jeweiligen Verstärkungselements innerhalb des jeweiligen Hohlraums des entsprechenden Seitenschwellers erreicht werden. Die Distanzelemente dienen insbesondere auch der Reduzierung der Anlagekontaktfläche zwischen dem jeweiligen Verstärkungselement und dem Seitenschweller, sodass bei eventuell auftretenden Relativbewegung zwischen diesen Teilen, beispielsweise auch beim Einschieben des Verstärkungselements in den Hohlraum des Seitenschwellers, die Gefahr einer großflächigen Beschädigung einer gegebenenfalls vorgesehenen Korrosionsschutzbeschichtung vermieden ist.

Eine weitere vorteilhafte Ausführungsform der Erfindung sieht vor, dass durch das jeweilige Verstärkungselement zumindest im Wesentlichen der gesamte Hohlquerschnitt des Hohlprofils des jeweiligen Seitenschwellers ausgefüllt ist. Es erfolgt mittels des jeweiligen Verstärkungselements also nicht nur eine Abstützung der Schwellerseitenwände und damit in Fahrzeugquerrichtung (y-Richtung), sondern auch in Fahrzeughochrichtung (z-Richtung) zwischen dem Seitenschwellerboden und der Seitenschwelleroberseite. Hierdurch kann eine besonders günstige Abstützung des jeweiligen Verstärkungselements und damit einhergehend eine besonders günstige Aussteifung des jeweiligen Seitenschwellers erzielt werden.

Eine weitere Ausführungsform der Erfindung sieht schließlich vor, dass das jeweilige Verstärkungselement durch Fixierelemente am zugeordneten Seitenschweller fixiert ist. Hierdurch lassen sich die Verstärkungselemente besonders günstig und steif innerhalb des jeweiligen Seitenschwellers positionieren.

Die vorstehend im Zusammenhang mit dem erfindungsgemäßen Baukastensystem genannten Vorteile gelten dabei in ebensolcher Weise für das Verfahren zum Herstellen einer Karosserie eines Kraftwagens gemäß Anspruch 9.

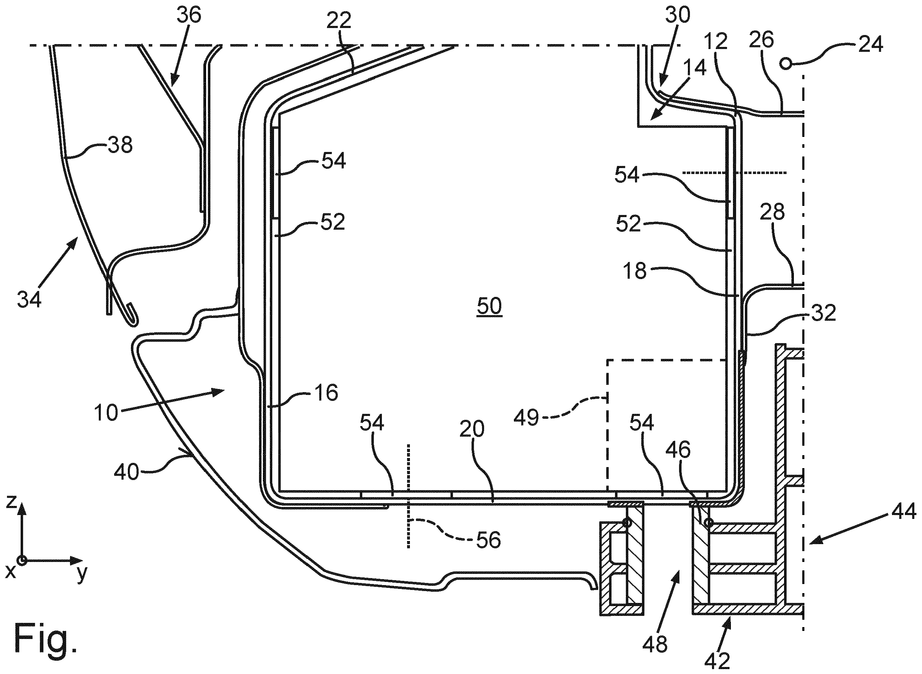

Weitere Vorteile und Einzelheiten der Erfindung ergeben sich aus der nachfolgenden Beschreibung eines bevorzugten Ausführungsbeispiels sowie anhand der Zeichnung. Die einzige Figur zeigt eine ausschnittsweise Schnittansicht einer Seitenschwelleranordnung einer Karosserie eines elektrisch antreibbaren Kraftwagens entlang einer in Fahrzeughochrichtung (z-Richtung) und in Fahrzeugquerrichtung (y-Richtung) verlaufenden Schnittebene. Erkennbar ist hierbei ein Seitenschweller 10, welcher sich in üblicher Weise an der entsprechenden Fahrzeugseite in Fahrzeuglängsrichtung und horizontal zwischen einem vorderen und einem hinteren Radhaus erstreckt. Der Seitenschweller 10 ist im vorliegenden Fall in Blechschalenbauweise ausgestaltet aus einer oder mehreren Blechschalen, welche beispielsweise durch Schweißen oder Kleben miteinander verbunden sind. Natürlich sind auch andere Konstruktionen und Bauweisen denkbar.

Insbesondere erkennbar ist aus der Figur, dass der kastenartige Seitenschweller 10 zumindest über einen hier dargestellten Längenbereich ein Hohlprofil 12 und einen Hohlraum 14 aufweist. Das Hohlprofil 12 wird dabei mittig beziehungsweise innenseitig durch jeweilige Seitenschwellerwände 16, 18 gebildet, welche sich vorliegend zumindest im Wesentlichen in Fahrzeughochrichtung (z-Richtung) und in Fahrzeuglängsrichtung (x-Richtung) erstrecken. Unterseitig sind die beiden Seitenschwellerwände 16, 18 über eine untere Seitenschwellerwand 20 einteilig miteinander ausgebildet. Oberseitig weist das Hohlprofil 12 des Seitenschwellers 10 einen komplexen, gewinkelten Verlauf einer entsprechenden Seitenschwellerwand 22 auf, welche ebenfalls die jeweiligen seitlichen Seitenschwellerwände 16, 18 ein- oder mehrteilig miteinander verbindet.

Von einem Fahrzeugboden 24, welcher sich innenseitig an die jeweiligen Seitenschweller 10 anschließt, sind im vorliegenden Fall zwei Blechtafeln beziehungsweise Blechwände 26, 28 erkennbar, welche an einem Absatz 30 der oberen Seitenschwellerwand 22 beziehungsweise über einen Winkel 32 innenseitig an der inneren Seitenschwellerwand 18 befestigt sind. Zwischen den Seitenschwellern 10 auf jeder Fahrzeugseite erstrecken sich darüber hinaus jeweilige Querträger, welche vorliegend jedoch nicht explizit erkennbar sind.

Des Weiteren zeigt die Figur oberseitig beziehungsweise außenseitig des Seitenschwellers 10 ein unteres Ende einer zugeordneten Seitentür 34, von welcher im Wesentlichen ein Türinnenteil 36 und eine Türaußenbeplankung 38 erkennbar sind. Unterseitig schließt sich an die Seitentür 34 ein aus Kunststoff bestehendes Verkleidungsteil 40 des Seitenschwellers 10 an.

Des Weiteren zeigt die Figur eine Schnittansicht durch ein Profil 42 eines ansonsten nicht weiter erkennbaren Batterietragrahmens 44, durch welchen eine Mehrzahl von Batteriemodulen aufgenommen ist, welche unter Vermittlung des Batterietragrahmens 44 an der Karosserie festgelegt sind. Genauer gesagt sind die jeweiligen Profile 42 rahmenartig um den Batteriepack angeordnet und so innerhalb einer durch die jeweiligen Seitenschweller 10 und einen jeweiligen, vorderen und hinteren Querträger begrenzten, rechteckförmigen Öffnung von unten her. Hierbei ist erkennbar, dass in das jeweilige, an einem der beiden Seitenschweller 10 zu befestigenden Profilelement 42 eine entsprechende, jeweilige Buchse 46 eingesetzt ist, durch welche hindurch ein Befestigungselement, vorliegend in Form einer Befestigungsschraube, durchsteckbar ist.

An jeweiligen Befestigungsstellen 48, im vorliegenden Fall also zumindest im Bereich der jeweiligen Buchsen 46, ist innerhalb des jeweiligen Hohlraums 14 des entsprechenden Seitenschwellers 10 ein jeweils zugeordnetes Verstärkungselement 50 vorgesehen. Dieses Verstärkungselement 50 kann beispielsweise als kastenartiges Blechbauteil, welches einteilig oder mehrteilig ausgebildet ist, gebildet sein. Ebenfalls kann das jeweilige Verstärkungselement 50 als Gussbauteil oder andersartig gestaltetes Metallbauteil, welches als Füllmaterial oder gegebenenfalls zumindest teilweise hohl ausgebildet ist, gestaltet sein. Gegebenenfalls ist auch eine Lösung aus einem Kunststoff, beispielsweise einem faserverstärkten Kunststoff, denkbar.

Im vorliegenden Fall erstreckt sich das jeweilige Verstärkungselement 50 in Fahrzeuglängsrichtung (x-Richtung) zumindest über einen entsprechenden Längenbereich des jeweiligen Hohlraums 14 des zugehörigen Seitenschwellers 10. Im konkreten Ausführungsbeispiel kann beispielsweise in einem vorderen und einem hinteren Endbereich des jeweiligen Seitenschwellers 10 jeweils ein Verstärkungselement 50 vorgesehen sein, sodass insgesamt vier Verstärkungselemente 50 vorgesehen sein, welche im Bereich der jeweiligen Befestigungsstelle 48 des Batterierahmens 44 angeordnet sind. Natürlich ist auch eine andersartige Anzahl derartiger Verstärkungselemente 50 denkbar.

Das hier gezeigte Verstärkungselement 50 erstreckt sich in Fahrzeugquerrichtung (y-Richtung) zumindest annähernd über die gesamte Breite des Seitenschwellers 10 zwischen den jeweiligen, sich in Fahrzeuglängsrichtung (x-Richtung) beziehungsweise in Fahrzeughochrichtung (z-Richtung) erstreckenden Seitenschwellerwänden 16, 18. Ein hierbei zwischen den Seitenschwellerwänden 16, 18 und dem Verstärkungselement 50 verbleibender, jeweiliger Zwischenspalt 52 ist durch ein jeweiliges Distanzelement 54 überbrückt, sodass beide Seitenschwellerwände 16, 18 zum Verstärkungselement 50 hin abgestützt sind. Auch unterseitig sind jeweilige Distanzelemente 54 vorgesehen, sodass auch hier ein entsprechender Zwischenspalt 52 zwischen dem Verstärkungselement 50 und der unteren Seitenschwellerwand 20 vorgesehen ist. Nach oben hin können ebenfalls derartige Distanzelemente 54 zwischen der Oberseite des Verstärkungselements 50 und der oberen Seitenschwellerwand 22 vorgesehen sein. Im Wesentlichen dienen die Distanzelemente 54 hierbei dazu, den jeweiligen Zwischenspalt 52 zu überbrücken, welcher jedoch gebraucht wird, damit das Verstärkungselement 50 nachträglich, also insbesondere nach dem Rohbau und einer damit einhergehenden kathodischen Tauchlackierung, beispielsweise im Zuge der Endmontage, in den jeweiligen Seitenschweller 10 eingesetzt werden kann. Hierfür ist ein leichtes Spiel erforderlich, welches dann durch das jeweilige Distanzelement 54 überbrückt werden kann. Das Distanzelement 54 selbst kann beispielsweise als Metall- oder Kunststoffteil ausgebildet sein, wobei auch eine flüssig- beziehungsweise schaumförmige, nachträglich aushärtende Komponente denkbar ist. Besonders vorteilhaft an den Distanzelementen 54 ist noch, dass diese beim Einschieben des Verstärkungselements 50 in den Seitenschweller die Anlagekontaktfläche reduzieren und damit die Gefahr des Abscheuerns der KTL-Beschichtung und/oder einer sonstigen Beschichtung nur auf einer verkleinerten Innenfläche des jeweiligen Seitenschwellers besteht.

Der Batterietragrahmen 44 ist vorliegend mittels eines entsprechenden Befestigungselements, insbesondere einer Befestigungsschraube, im Bereich der Befestigungsstelle 48 rohbauseitig fixiert. Beispielsweise sind hierbei pro Seitenschweller 10 jeweils sieben entsprechende Befestigungselemente beziehungsweise Befestigungsschrauben vorgesehen. Jedes dieser Befestigungselemente durchsetzt dabei die untere Seitenschwellerwand 20 im Weiteren auf verschiedene Weise fixierend.

Bei einer ersten Lösung ist es beispielsweise denkbar, dass das jeweilige Befestigungselement des Batterietragrahmens 48 direkt mit dem jeweiligen Verstärkungselement 50 verbunden ist. Hierzu kann das Verstärkungselement 50 beispielsweise ein Befestigungsgewinde oder eine Befestigungsmutter aufweisen, welche entsprechend in das Verstärkungselement 50 integriert oder an diesem befestigt ist.

In einer anderen Variante ist es beispielsweise denkbar, dass eine Befestigungsmutter separat vom Verstärkungselement 50 ausgebildet und entweder rohbauseitig am Seitenschweller 10, beispielsweise innenseitig an der unteren Seitenschwellerwand 20 durch Schweißen, Kleben oder dergleichen angebracht ist, oder die Befestigungsmutter wird ebenfalls nachträglich als Montageteil nach Erstellung des Rohbaus beziehungsweise nach Durchlauf der Karosserie durch die kathodische Tauchlackierung nachträglich innenseitig des Hohlraums 14 eingesetzt, um mit dem Befestigungselement in Form der Befestigungsschraube auf Seiten des Batterietragrahmens 44 verbunden zu werden. Bei den letztgenannten Varianten kann dabei im Bereich des Verstärkungselements eine jeweilige Aussparung für die entsprechenden Befestigungselemente, beispielsweise Befestigungsmuttern, vorgesehen sein.

Das Verstärkungselement 50 kann beispielsweise mittels jeweiliger, angedeuteter Fixierschrauben 56 innerhalb des Hohlraums 14 des Seitenschwellers 10 vorfixiert sein. Diese Variante empfiehlt sich insbesondere, wenn das jeweilige Verstärkungselement 50 nicht unmittelbar mit der Befestigungsschraube auf Seiten des Batterietragrahmens 44 verbunden ist. Bei letztgenannter Variante kann auf die Fixierschrauben 56 auch verzichtet werden.

Durch die vorliegend vorgesehenen Verstärkungselemente 50 kann insbesondere dem Umstand Rechnung getragen werden, dass bei einer Variante der Karosserie des Kraftwagens, bei welcher dieser mit einem Verbrennungsmotor oder dergleichen angetrieben wird, insbesondere im Bereich zwischen den Seitenschwellern unterhalb des Fahrzeugbodens ein weitaus geringeres Gewicht aufweist, sodass beispielsweise bei einem Seitenaufprall weitaus geringere Kräfte im Bereich der Seitenschweller 10 wirken. Aus diesem Grund kann bei einer derartigen Variante der Karosserie auf die entsprechende Seitenschwellerverstärkung verzichtet werden.

Wird die Karosserie hingegen für einen elektrisch angetriebenen Kraftwagen vorgesehen, bei welcher infolge der zwischen den Seitenschwellern 10 angeordneten Batterien zur Versorgung eines Elektromotors ein erheblich höheres Gewicht in diesem Bereich ist, so kann durch das Einsetzen der Verstärkungselemente 50 insgesamt eine Seitenschwelleranordnung geschaffen werden, bei welcher beispielsweise Seitenaufprallkräfte oder Pfahlanprallkräfte weitaus besser aufgenommen werden können. Darüber hinaus ergeben sich durch die Verstärkungselemente 50 hinsichtlich der statischen und dynamischen Kräfte, die auf den jeweiligen Seitenschweller 10 beziehungsweise die Karosserie insgesamt wirken, eine erhebliche Versteifung der Karosserie.

Durch das somit geschaffene Baukastensystem der Karosserie des Kraftwagens, bei welcher je nach Bauvariante entsprechende Verstärkungselemente 50 vorgesehen werden oder nicht, ist somit eine optimale Anpassbarkeit auf das jeweilige Fahrzeuggewicht beziehungsweise die jeweiligen unfallbezogenen, statischen oder dynamischen Kräfte möglich, ohne dass es beispielsweise in Bezug auf eine Bauvariante mit Verbrennungsmotor zu einer Überdimensionierung der Seitenschwelleranordnung kommt oder bezüglich einer elektrisch betreibbaren Variante zu einer Unterdimensionierung der Seitenschwelleranordnung.

Die jeweiligen Verstärkungselemente 50 können dabei vorzugsweise nicht bereits im Rohbau der Karosserie, sondern erst in der Endmontage eingefügt werden. Somit kann der Rohbau bereits vollständig hergestellt und im Zuge der kathodischen Tauchlackierung fertiggestellt werden, sodass die Verstärkungselemente 50 erst bei der Endmontage in das jeweilige Hohlprofil 12 des entsprechenden, bauvariantenübergreifenden Seitenschwellers 10 von vorne oder hinten her eingeschoben werden können. Die jeweiligen Zwischenspalte 52 zwischen den Seitenschwellerwänden 16 bis 22 einerseits und dem Verstärkungselement 50 andererseits sind dabei vorzugsweise so gewählt, dass eine einfache Montage einerseits möglich ist und andererseits vermieden wird, dass beim Einschieben der Verstärkungselemente 50 ein Lack der Karosserie, welcher beispielsweise beim kathodischen Tauchlackieren aufgebracht wird, beschädigt wird.

Somit ist in einfacher Weise eine optimale Anpassbarkeit der Seitenschwelleranordnung beziehungsweise der Karosserie an das jeweilige Fahrzeugkonzept möglich.

## Patentansprüche

1. Baukastensystem für eine Karosserie eines Kraftwagens, welcher zumindest eine elektrisch betreibbare Bauvariante und eine verbrennungsmotorisch betreibbare Bauvariante umfasst, mit jeweiligen bauvariantenübergreifenden Seitenschwellern (10), welche zumindest in einem jeweiligen Längenbereich ein Hohlprofil (12) aufweisen,
**dadurch gekennzeichnet, dass**
bei der verbrennungsmotorisch betreibbaren Bauvariante des Kraftwagens die jeweiligen Seitenschweller (10) im entsprechenden Längenbereich ein Hohlprofil (12) aufweisen und dass bei der elektrisch betreibbaren Bauvariante des Kraftwagens, bei der an den Seitenschwellern (10) ein Batterietragrahmen (44) mittels jeweiliger Befestigungselemente an jeweils zugehörigen Befestigungsstellen (48) der Seitenschweller (10) festlegbar ist, wobei innerhalb des jeweiligen Hohlraums (14) des entsprechenden Seitenschwellers (10) ein zugeordnetes bauvariantenspezifisches Verstärkungselement (50) vorgesehen ist, welches sich zumindest über die annähernd gesamte Breite des zugeordneten Seitenschwellers (10) zwischen jeweiligen Seitenschwellerwänden (16,18) erstreckt.

2. Baukastensystem nach Anspruch 1,
**dadurch gekennzeichnet, dass**
diese Verstärkungselemente (50) im Bereich der Befestigungsstellen (48) für den Batterietragrahmen (44) angeordnet sind und sich jeweils -in Kraftwagenquerrichtung gesehen- zumindest in teilweiser Überdeckung mit dem Batterietragrahmen (44) befinden.

3. Baukastensystem nach Anspruch 1 oder 2,
**dadurch gekennzeichnet, dass**
die Verstärkungselemente (50) die Befestigungsstellen (48) für den Batterietragrahmen (44) überdecken.

4. Baukastensystem nach einem der vorhergehenden Ansprüche,
**dadurch gekennzeichnet, dass**
die Verstärkungselemente (50) jeweilige Aufnahmen für Befestigungselemente für den Batterietragrahmen (44) aufweisen.

5. Baukastensystem nach einem der vorhergehenden Ansprüche,
**dadurch gekennzeichnet, dass**
die Verstärkungselemente (50) jeweilige Aussparungen für die Befestigungselemente für den Batterietragrahmen (44) aufweisen.

6. Baukastensystem nach einem der vorhergehenden Ansprüche,
**dadurch gekennzeichnet, dass**
zwischen dem jeweiligen Verstärkungselement (50) und den entsprechenden Seitenschwellerwänden (16,18) jeweilige Distanzelemente (54) angeordnet sind.

7. Baukastensystem nach einem der vorhergehenden Ansprüche,
**dadurch gekennzeichnet, dass**
durch das jeweilige Verstärkungselement (50) zumindest im Wesentlichen der gesamte Hohlquerschnitt des Hohlprofils (12) des jeweiligen Seitenschwellers (10) ausgefüllt ist.

8. Baukastensystem nach einem der vorhergehenden Ansprüche,
**dadurch gekennzeichnet, dass**
das jeweilige Verstärkungselement (50) durch Fixierelemente am zugeordneten Seitenschweller (10) fixiert ist.

9. Verfahren zum Herstellen einer Karosserie eines Kraftwagens, welcher zumindest eine elektrisch betreibbare Bauvariante und eine verbrennungsmotorisch betreibbare Bauvariante umfasst, mittels eines Baukastensystems, bei welchem jeweilige bauvariantenübergreifende Seitenschweller (10) vorgesehen werden, welche zumindest in einem jeweiligen Längenbereich ein Hohlprofil (12) aufweisen, **dadurch gekennzeichnet, dass**
bei der verbrennungsmotorisch betreibbaren Bauvariante des Kraftwagens die jeweiligen Seitenschweller (10) im entsprechenden Längenbereich mit einem Hohlprofil (12) vorgesehen werden und
dass bei der elektrisch betreibbaren Bauvariante des Kraftwagens, bei der an den Seitenschwellern (10) ein Batterietragrahmen (44) mittels jeweiliger Befestigungselemente an jeweils zugehörigen Befestigungsstellen (48) der Seitenschweller (10) festlegbar wird, innerhalb des jeweiligen Hohlraums (14) des entsprechenden Seitenschwellers (10) ein zugeordnetes bauvariantenspezifisches Verstärkungselement (50) vorgesehen wird, welches sich zumindest über die annähernd gesamte Breite des zugeordneten Seitenschwellers (10) zwischen jeweiligen Seitenschwellerwänden (16,18) erstreckt.

## Claims

1. A modular system for a body of a motor vehicle which comprises at least one electrically operable construction variant and a construction variant that can be operated by an internal combustion engine, having side sills (10) common to the particular construction variants, which side sills have a hollow profile (12) at least in a relevant length region,
**characterized in that**
in the case of the construction variant of the motor vehicle that can be operated by an internal combustion engine, each of the side sills (10) has a hollow profile (12) in the corresponding length region, **and in that**, in the electrically operable construction variant of the motor vehicle, in which a battery support frame (44) can be fixed to the side sills (10) by means of relevant fastening elements on associated fastening points (48) of the side sills (10), wherein an associated reinforcing element (50) specific to the structural variant is provided within each cavity (14) of the corresponding side sill (10), which element extends between each of the side sill walls (16, 18) at least over the approximately entire width of the associated side sill (10).

2. The modular system according to claim 1,
**characterized in that**
said reinforcing elements (50) are arranged in the region of the fastening points (48) for the battery support frame (44) and are in each case located at least partially covering the battery support frame (44) when viewed in the transverse direction of the motor vehicle.

3. The modular system according to either claim 1 or claim 2, **characterized in that**
the reinforcing elements (50) cover the fastening points (48) for the battery support frame (44).

4. The modular system according to any of the preceding claims, **characterized in that**
the reinforcing elements (50) each have receptacles for fastening elements for the battery support frame (44).

5. The modular system according to any of the preceding claims, **characterized in that**
the reinforcing elements (50) each have recesses for the fastening elements for the battery support frame (44).

6. The modular system according to any of the preceding claims, **characterized in that**
spacer elements (54) are arranged between each reinforcing element (50) and the corresponding side sill walls (16, 18).

7. The modular system according to any of the preceding claims, **characterized in that**
the entire hollow cross section of the hollow profile (12) of each side sill (10) is at least substantially filled by the reinforcing element (50).

8. The modular system according to any of the preceding claims, **characterized in that**
each reinforcing element (50) is fixed to the associated side sill (10) by fixing elements.

9. Method for producing a body of a motor vehicle which comprises at least one electrically operable construction variant and a construction variant that can be operated by an internal combustion engine, by means of a modular system in which side sills (10) common to the particular construction variants are provided which have a hollow profile (12) at least in a relevant length region,
**characterized in that**
in the case of the construction variant of the motor vehicle that can be operated by an internal combustion engine, each of the side sills (10) is provided with a hollow profile (12) in the corresponding length region, and
**in that** in the electrically operable construction variant of the motor vehicle, in which a battery support frame (44) can be fixed to the side sills (10) by means of relevant fastening elements on associated fastening points (48) of the side sill (10), an associated reinforcing element (50) specific to the structural variant is provided within each cavity (14) of the corresponding side sill (10), which element extends between side sill walls (16, 18) at least over the approximately entire width of the associated side sill (10).

## Revendications

1. Système modulaire pour une carrosserie d'un véhicule automobile, qui comprend au moins une variante de construction pouvant être actionnée électriquement et une variante de construction pouvant être actionnée par un moteur à combustion interne, comportant des seuils latéraux (10) respectifs pour toutes les variantes de construction, qui présentent un profilé creux (12) au moins dans une zone longitudinale respective,
**caractérisé en ce que**
dans la variante de construction pouvant être actionnée par un moteur à combustion interne du véhicule automobile, les seuils latéraux (10) respectifs présentent un profilé creux (12) dans la zone longitudinale correspondante et que, dans la variante de construction pouvant être actionnée électriquement du véhicule automobile, dans laquelle un cadre de support de batterie (44) peut être fixé sur les seuils latéraux (10) au moyen d'éléments de fixation respectifs au niveau de points de fixation (48) associés respectifs des seuils latéraux (10), dans lequel un élément de renforcement (50) spécifique à la variante de construction est prévu au sein de l'espace creux (14) respectif du seuil latéral (10) correspondant, élément qui s'étend au moins sur près de toute la largeur du seuil latéral (10) associé entre des parois (16,18) de seuil latéral respectives.

2. Système modulaire selon la revendication 1,
**caractérisé en ce que**
ces éléments de renforcement (50) sont agencés dans la zone des points de fixation (48) pour le cadre de support de batterie (44) et se trouvent respectivement, vus dans la direction transversale du véhicule automobile, au moins en chevauchement partiel avec le cadre de support de batterie (44).

3. Système modulaire selon la revendication 1 ou 2,
**caractérisé en ce que**
les éléments de renforcement (50) recouvrent les points de fixation (48) pour le cadre de support de batterie (44).

4. Système modulaire selon l'une des revendications précédentes, **caractérisé en ce que**
les éléments de renforcement (50) présentent des cavités respectives pour les éléments de fixation pour le cadre de support de batterie (44).

5. Système modulaire selon l'une des revendications précédentes, **caractérisé en ce que**
les éléments de renforcement (50) présentent des évidements respectifs pour les éléments de fixation pour le cadre de support de batterie (44).

6. Système modulaire selon l'une des revendications précédentes, **caractérisé en ce que**
des éléments d'espacement (54) respectifs sont agencés entre l'élément de renforcement (50) respectif et les parois (16, 18) de seuil latéral correspondantes.

7. Système modulaire selon l'une des revendications précédentes, **caractérisé en ce que**
au moins essentiellement la totalité de la section transversale creuse du profilé creux (12) du seuil latéral (10) respectif est remplie par l'élément de renforcement (50) respectif.

8. Système modulaire selon l'une des revendications précédentes, **caractérisé en ce que**
l'élément de renforcement (50) respectif est fixé par des éléments de fixation sur le seuil latéral (10) associé.

9. Procédé de fabrication d'une carrosserie d'un véhicule automobile, qui comprend au moins une variante de construction pouvant être actionnée électriquement et une variante de construction pouvant être actionnée par un moteur à combustion interne, au moyen d'un système modulaire, dans lequel des seuils latéraux (10) respectifs pour toutes les variantes de construction sont prévus, qui présentent un profilé creux (12) au moins dans une zone longitudinale respective,
**caractérisé en ce que**
pour la variante de construction pouvant être actionnée par un moteur à combustion interne du véhicule automobile, les seuils latéraux (10) respectifs sont pourvus dans une zone longitudinale correspondante d'un profilé creux (12) et
que, dans la variante de construction pouvant être actionnée électriquement du véhicule automobile, dans laquelle un cadre de support de batterie (44) peut être fixé sur les seuils latéraux (10) au moyen d'éléments de fixation respectifs au niveau de points de fixation (48) associés respectifs des seuils latéraux (10), un élément de renforcement (50) associé spécifique à la variante de construction est prévu au sein de l'espace creux (14) respectif du seuil latéral (10) correspondant, élément qui s'étend au moins sur près de toute la largeur du seuil latéral (10) associé entre des parois (16,18) de seuil latéral respectives.
